Europäisches Patentamt

European Patent Office

Office européen des brevets

(11) Publication number: **0 248 567 A2**

# EUROPEAN PATENT APPLICATION

(21) Application number: 87304514.0

(22) Date of filing: 21.05.87

(51) Int. Cl.4: **B29C 67/18 , B25D 1/00**

(30) Priority: 27.05.86 ZA 863954

(43) Date of publication of application:
09.12.87 Bulletin 87/50

(84) Designated Contracting States:
AT BE CH DE ES FR GB GR IT LI LU NL SE

(71) Applicant: **Britz, Johannes Hermanus**
**28, Wilcox Avenue**
**Bayswater Bloemfontein Orange Free**
**State(ZA)**

(72) Inventor: **Britz, Johannes Hermanus**
**28, Wilcox Avenue**
**Bayswater Bloemfontein Orange Free**
**State(ZA)**

(74) Representative: **Woodin, Anthony John et al**
**Fitzpatricks 53A High Street**
**Huntingdon Cambridgeshire PE18 6AQ(GB)**

(54) **Hand tool for percussive use.**

(57) A method of making a hand tool for percussive use includes locating a hollow elongate handle member 22 in a head-shaped mould cavity 16 so that a portion of the handle member protrudes from the cavity. A settable polymeric material is introduced into the mould cavity, and into the inside of the handle member. On setting, the material forms a head of the hand tool in the mould cavity, with the handle member secured to the head by means of the polymeric material extending from the head into the handle member. The invention also provides a hand tool for percussive, use, and apparatus for moulding the hand tool.

FIG I

THIS INVENTION relates to a hand tool for percussive use. It relates in particular to a method of making such a hand tool, to a hand tool when made according to the method, and to mould apparatus for moulding such a hand tool.

According to a first aspect of the invention, there is provided a method of making a hand tool for percussive use, which includes

locating a hollow elongate handle member in a head-shaped mould cavity so that a portion of the handle member protrudes from the cavity;

introducing a settable polymeric material into the mould cavity and into the inside of the handle member; and

allowing the material to set, thereby to form a head of the hand tool in the mould cavity with the handle member secured to the head by means of the polymeric material extending from the head into the handle member.

Hence, the polymeric material, when set and cured, forms the head of the tool as well as attachment means attaching the head to the handle member. It also reinforces the handle member. In other words, the head is moulded, with the handle member moulded to the head.

The handle member may be of rigid tubular form, may be linear, and its one or first end may be located inside the mould cavity. Sufficient polymeric material may be introduced into the mould cavity so that the polymeric material extends up the handle member for at least half its length, the material entering the handle member through its axial opening.

The method may include providing a plurality of transverse passageways or apertures in the wall of the handle member in proximity to its first end. In use, the polymeric material will hence also extend through these passageways, thereby to assist in securing the handle member to the head.

The method may also include providing an elongate cylindrical grip-shaped mould cavity around the other or second end of the handle member as well as apertures in the handle member wall in proximity to its second end, with sufficient polymeric material then being introduced into the head-shaped mould cavity and handle member so that some of the material also passes through these apertures into the cylindrical mould cavity, thereby to mould integrally with the handle member a thickened grip portion around the second end of the handle member.

The method may further include providing an elongate cylindrical mould cavity between the head-shaped and grip-shaped mould cavities, with the remainder of the handle member located with peripheral clearance in this cavity and with the cylindrical mould cavity being in communication with the head-shaped mould cavity, and allowing polymeric material also to enter this annular space from the head-shaped mould cavity.

The polymeric material may be polyurethane, which may be polyester-based. In one embodiment of the invention, the polyurethane may be substantially solid. In another embodiment of the invention, the polyurethane may be expanded, foamed or microcellular, and it may then have a predominantly closed cell structure.

The polymeric material may comprise an admixture of a polyol, a polyisocyanate, and a cross-linking agent. In particular, it may comprise a two-component system, a first component comprising the polyisocyanate, and a second component comprising a polyol/cross-linking agent blend.

The mass ratio of cross-linking agent to polyol in the blend, ie the second component, may be at least 1:19, eg about 1:9. The polyol may be a polyester polyol. The polyester polyol may be a linear polyester polyol having primary hydroxyl groups as chain terminating groups.

The polyisocyanate may be a diisocyanate having an NCO content of 15 to 25%. The mass ratio of the diisocyanate to the polyol/cross-linking agent blend, ie of the first component to second component, may be at least 50:100. For example, it may be about 70:100 to about 90:100, eg about 80:100. The mass ratio of the polyester polyol to the disocyanate may be about 1:0,8 to about 1:1,15, eg about 1:10,9 to about 1:1,13.

The cross-linking agent may comprise one or more of the following: a chain extender, a blowing agent (when the polymeric material is expandable), a catalyst, and a surface active agent capable of stabilizing the foamed structure. Preferably, it comprises an admixture of all four these components, when the polymeric material is expandable. The chain extender, when present, may comprise a short-chain hydroxyl-containing compound. The blowing agent, when present, may be water.

The material may also include a diluent. The diluent may be methylene chloride, and the mass ratio of the diluent to the polyester polyol may be less than 10:100, eg about 2:100 to about 4:100.

The density of the moulded head may be at least 100 $kg/m^3$. It may be about 250 to 500 $kg/m^3$, eg about 300 to 400 $kg/m^3$.

The method may include turning the mould cavity over, prior to firm setting of the polymeric material, eg while the material is still expanding, to ensure that the settled material has a uniform density.

The method may also include permitting air to escape from the head-shaped mould cavity by means of the other or second end of the handle member and/or by means of at least one air escape or vent passageway leading from the head-shaped mould cavity.

The method may further include preheating the head-shaped mould cavity to a temperature of between 25°C and 35°C prior to introducing the polymeric material into the mould cavity and/or maintaining the mould cavity at a temperature of at least 25°C, e.g. between 35°C and 100°C, for between 5 and 20 minutes after the polymeric material has been introduced thereinto, to allow the material components to react and cure.

According to a second aspect of the invention, there is provided a hand tool for percussive use, which includes
a head of polymeric material; and
a tubular handle member protruding from the head, with polymeric material extending from the head into the inside of the handle member.

The handle member may be of linear form, with its axial opening at one end located in the head so that the polymeric material extends into the handle member through said axial opening, at least one further aperture also being provided in the handle member in proximity to said axial opening with polymeric material also extending through this aperture. A grip portion or member may be provided around the other end of the handle member with the grip member also being of polymeric material and being connected to polymeric material inside the handle member by means of polymeric material passing through at least one aperture in the handle member at its said second end.

The hand tool may be made according to the method as hereinbefore described.

According to a third aspect of the invention, there is provided mould apparatus for moulding a hand tool for percussive use the apparatus comprising
a mould providing a head-shaped mould cavity; and
an opening leading into the mould cavity in which an elongate tubular handle member can be located.

The apparatus may include a filler opening for introducing settable polymeric material into the mould cavity.

The mould may comprise two complementary mould sections, each providing a portion of the mould cavity. The head-shaped mould cavity may be circular in cross-section. Each mould section hence comprises a portion of the head-shaped mould cavity, as well as an elongate secondary mould cavity extending transversely to said portion of the head-shaped mould cavity, the handle member, in use, being locatable in the secondary mould cavity. The free end of the secondary cavity, ie the end remote from the head-shaped mould cavity, may have an enlarged cross-sectional area so that, in use, a thickened grip member can be moulded around the free end of the handle member. This enlarged portion of the secondary mould cavity may be provided with hand-grip formations.

The invention will now be described by way of example with reference ot the accompanying diagrammatic drawings.

In the drawings,

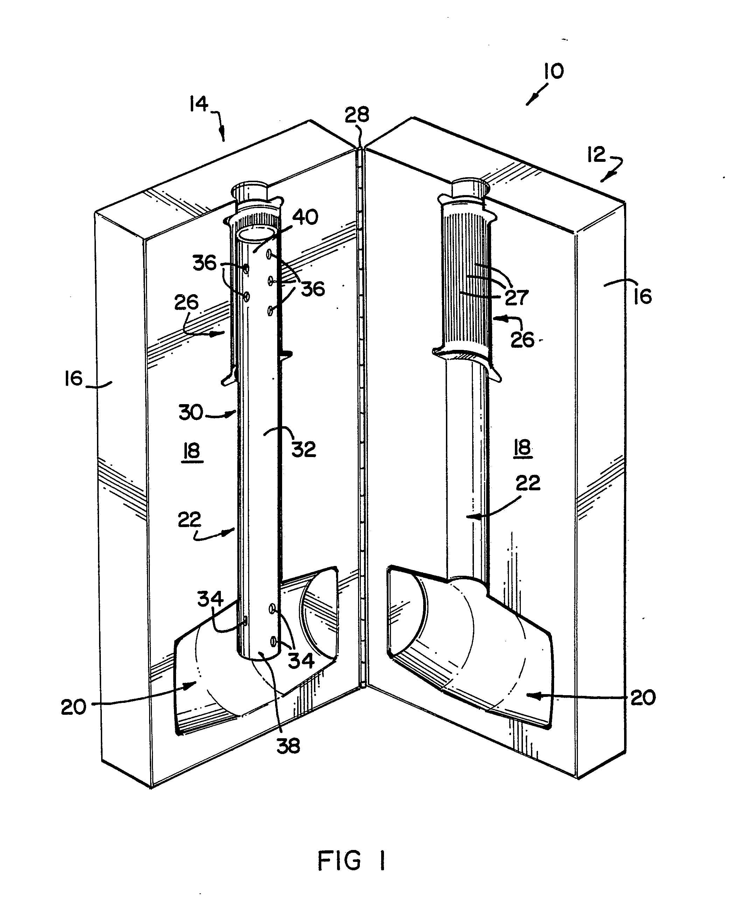

FIGURE 1 shows a three-dimensional view of mould apparatus according to the third aspect of the invention, with a handle member for use with the mould apparatus also being shown;

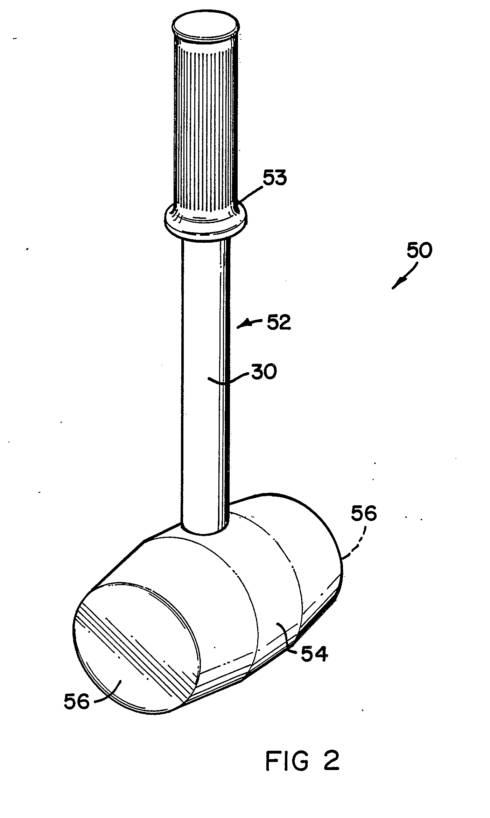

FIGURE 2 shows a three-dimensional view of a hand tool for percussive use, moulded in the apparatus of Figure 1.

In the drawings, reference numeral 10 generally indicates mould apparatus according to the third aspect of the invention.

The apparatus 10 comprises two mould sections 12, 14. Each section 12, 14 comprises a rectangular metal casing 16 containing a mould 18. Each mould 18 provides a portion 20 of a head-shaped mould cavity, as well as a portion 22 of a secondary cylindrical mould cavity. The portion 20, 22 are hemispherical in cross-section. At one end 24 of each of the portions 22, there is provided an enlarged hand-grip shaped portion 26, which is of greater cross-sectional area than the remainder of the portions 22. The mould surfaces of the portions 26 are provided with grip formations in the form of grooves 27.

The casings 16 are hingedly connected together by means of a hinge 28.

An elongate handle member 30 is also provided. The handle member 30 comprises a rigid circular section tube 32 having longitudinally and circumferentially spaced apertures 34, 36 in proximity to its ends 38, 40 respectively.

The mould 18 may be of metal, eg aluminium; polymeric material, eg castable resin; or the like.

In use, the end 38 of the handle member 30 is located in the portion 20 of the head-shaped mould cavity in one of the mould sections 12, 14. The ends 38, 40 of the handle member 30 can be precoated with a bonding agent, to enhance adhesion of the polymeric material, as described in more detail hereunder, thereto. The handle member 30 nestles in the portion 22 of the secondary mould cavity of that mould section, with its end 40 located within the mould cavity portion 26. The other mould section is pivoted to mate with the mould section in which the handle member is located. The mould apparatus 10 is then placed in a press (not shown) which holds the mould sections firmly together, with the head-shaped cavity located lowermost and the handle member 30 extending upwardly, eg vertically upwardly.

In one embodiment of the invention, there can then be introduced into the upper end 40 of the handle member 30, a liquid admixture of a polyol blend comprising substantially linear polyester polyols having primary hydroxyl groups as chain-terminating groups, short-chain hydroxyl-containing chain extenders, water or another suitable blowing agent, catalysts for accelerating the reactions, and surface-active agents capable of stabilizing the foam structure; methylene chloride as a diluent to impart adequate pourability to the admixture; and an organic polyisocyanate, eg a diisocyanate. The components of the mixture may be blended together mechanically, eg by means of a rotary stirrer, while heating in a water bath.

The polyol blend may comprise about 90% by mass polyols, and the admixture may comprise about 100 parts by mass of the polyol blend, 2 to 4 parts by mass methylene chloride, and 70 to 80 parts by mass isocyanate.

The admixture passes down the inside of the stem into the head-shaped cavity, which it fills, hence displacing air from the cavity. Sufficient liquid mixture is introduced almost to fill the head-shaped mould cavity, the inside of the handle member, and the annular space defined by the cavity portion 26 around the end 40 of the handle member. The polymeric material hence also passes through, and is located in, the apertures 34, 36.

The liquid components in the admixture react to form a foamed cellular polyurethane which fills the mould cavities entirely. Air displaced from the mould cavities escapes via the end 40 of the handle member 30. A sufficient amount of the polymeric material is introduced so that the foamed polyurethane material has a moulded density of 300 to 400 kg/m² or higher. The initial reaction, foaming and curing, is effected for about 10 minutes at a temperature of about 40°C to 60°C, this elevated temperature resulting from the exothermic nature of the reaction. During this period, the apparatus can be inverted and/or tapped lightly, eg with a rubber mallet, to ensure product homogeneity, ie a uniform density, and to allow air to escape. The moulding is then removed from the mould, and allowed to set and cure further, eg for up to 24 hours. This further curing can instead be effected in the mould, if desired. The moulded head has a predominantly closed-cell microcellular structure.

To produce a moulded head which is substantially solid, ie with few or no voids or cells, the water or other blowing agent can be omitted.

In another embodiment of the invention, a substantially solid polyurethane moulding can be formed by introducing into the mould apparatus a polymeric admixture comprising 90 to 110 parts by mass base polyester blend; 5 to 15 parts by mass chain extender; 0,10 to 0,3 parts by mass catalyst, and 1 to 3 parts by mass pigment, eg brown pigment. For example, the admixture can be that available in South Africa under the designation TF 4630 from Industrial Urethanes (Pty) Limited. This admixture comprises 100 parts by mass base polyester blend, eg that available in South Africa under the designation TF 4660 from Industrial Urethanes (Pty) Limited; 8,5 parts by mass Polycure D (trade name) as chain extender; 0,18 parts by mass Dabco 33LV Crystals (trade name) as catalyst; and 2 parts by mass brown pigment.

To obtain a foamed or cellular moulding, 0,2 to 1,0 parts by mass, eg about 0,45 parts by mass, water or other blowing agent can be added to the admixture.

The tubular handle 22 is of rigid or stiff material such as metal, eg steel; rigid plastics material; graphite; or the like. Its inner diameter may typically be about 2 cm, and its wall thickness about 1-2 mm.

Hence, a hammer 50 comprising a handle 52 having a grip portion 53 and a head 54 of moulded polyurethane material attached to the handle, and with polymeric material extending into the handle, is produced in the apparatus 10. The head 54 is circular in cross-section and has striking surfaces 56. The handle member 30, grip member 53, and the polymeric material inside the handle member, hence constitute the handle 52. The handle member 30 ensures that the handle has a desired degree of rigidity or stiffness, while the polymeric material inside the handle member portion 30 attaches the handle securely to the head 54, and the grip 53 securely to the handle member 30, especially as a result of polymeric material extending also through the apertures 34, 36. The polymeric material hence extends substantially all the way up the handle member 22. The polyurethane material extending into the handle member 30 also provides reinforcement or strengthening for the handle. In use, the polyurethane also absorbs shocks imparted to the head on striking with the tool.

The tube 32 can be of metal, eg steel; rigid plastics material; graphite; or the like.

If desired, a polymeric material filler opening or nozzle (not shown) leading into one of the mould cavities can be provided. For example, such a nozzle can be provided in the bottom of one of the portions 20. The polymeric material can then be introduced via this opening, with air being displaced via the upper end of the handle member 30. If further desired, air vent passageways (not shown) can be provided in the moulds 18, these passageways (which may be similar to, but of smaller cross-sectional area than the portion 22) leading upwardly from the portions 20, through the moulds 18, and through the casings 16.

Furthermore, the radius of the portion 22 can be increased so that an annular space or gap (not shown) around the member 30, extending from the portions 20 to the portion 26, is provided in each of the moulds 18. Polymeric material will hence also enter these spaces, resulting in the entire tube 22 being coated with polyurethane material. The remainder of the tube 22 will then also be precoated with the bonding agent so that the entire tube 22 can in this embodiment be precoated with the bonding agent.

Hence, with the hand tool 50 the problem of insufficient or insecure attachment of the head to the handle, resulting in the head being movable relative to the handle, eg about the axis of the handle, associated with known percussive tools and hence unsuitability of the tool for further use, is reduced or overcome. Further, with the hand tool 50, as well as with the hand tool 10 when its handle is of plastics material or graphite, the problem of sparks being generated in use is avoided, hence rendering these tools suitable for use in hazardous locations, eg in mines.

## Claims

1. A method of making a hand tool for percussive use, characterized in that it includes
locating a hollow elongate handle member in a head-shaped mould cavity so that a portion of the handle member protrudes from the cavity;
introducing a settable polymeric material into the mould cavity and into the inside of the handle member; and
allowing the material to set, thereby to form a head of the hand tool in the mould cavity with the handle member secured to the head by means of the polymeric material extending from the head into the handle member.

2. A method according to Claim 1, characterized in that the handle member is of rigid tubular form, with its one or first end located inside the mould cavity, sufficient material being introduced into the mould cavity so that the polymeric material extends up the handle member for at least half its length, with the material entering the handle member through its axial opening.

3. A method according to Claim 2, characterized in that it includes providing a plurality of apertures in a wall of the handle member in proximity to its first end so that the polymeric material extends through these apertures, thereby to assist in securing the handle to the head.

4. A method according to Claim 2 or Claim 3, characterized in that it includes providing an elongate cylindrical grip-shaped mould cavity around the other or second end of the handle member as well as apertures in the wall of the handle member in proximity to its second end, with sufficient polymeric material being introduced into the head-shaped mould cavity and handle member so that some of the material also passes through these apertures into the cylindrical grip-shaped mould cavity, thereby to mould integrally with the handle member a thickened grip portion around the second end of the handle member.

5. A method according to Claim 4, characterized in that it includes providing an elongate sleeve-like mould cavity between the head-shaped and grip-shaped mould cavities, with the remainder of the handle member located with peripheral clearance in this cavity, with the sleeve-like mould cavity being in communication with the head-shaped mould cavity, and allowing polymeric material also to enter this annular space from the head-shaped mould cavity.

6. A method according to any one of Claims 2 to 5 inclusive, characterized in that it includes
(i) preheating the head-shaped mould cavity to a temperature of between 25°C and 35°C prior to introducing the polymeric material into the mould cavity and maintaining the mould cavity at a temperature of at least 25°C for between 5 and 20 minutes after the polymeric material has been introduced thereinto, to allow the material components to react and cure;
(ii) turning the mould cavity over, prior to firm setting of the polymeric material, to ensure that the settled material has a uniform density; and
(iii) permitting air to escape from the head-shaped mould cavity by means of the other end of the handle member.

7. A hand tool for percussive use, characterized in that it includes
a head of polymeric material; and
a tubular handle member protruding from the head, with polymeric material extending from the head into the inside of the handle member.

8. A hand tool according to Claim 7, characterized in that the handle member is of linear form, with its axial opening at one end located in the head so that polymeric material extends into the handle member through said axial opening, at least one further aperture being provided in the member in proximity to said axial opening with polymeric material also extending through this aperture.

9. Mould apparatus for moulding a hand tool for percussive use characterized in that it comprises

a mould providing a head-shaped mould cavity; and

an opening leading into the mould cavity in which an elongate tubular handle member can be located.

10. Mould apparatus according to Claim 9, characterized in that the mould comprises two complementary mould sections, each section including a portion of the head-shaped mould cavity, as well as an elongate secondary mould cavity, extending transversely to the portion of the head-shaped mould cavity, the handle member, in use, being locatable in the secondary mould cavity.

FIG 1

FIG 2